# EUROPÄISCHE PATENTSCHRIFT

(11) **EP 1 851 486 B1**
(45) Veröffentlichungstag und Bekanntmachung des Hinweises auf die Patenterteilung: **08.12.2010**
(21) Anmeldenummer: 06706624.1
(22) Anmeldetag: 03.02.2006
(51) Int. Cl.: F24D 19/10

(54) **REGELSYSTEM FÜR FLÄCHENHEIZUNGEN**
CONTROL SYSTEM FOR PANEL HEATING
SYSTEME DE REGULATION POUR DES SYSTEMES DE CHAUFFAGE DE SURFACE

(30) Priorität: 07.02.2005 DE 102005005733
(43) Veröffentlichungstag der Anmeldung: 07.11.2007
(73) Patentinhaber: Gabanyi, Peter, 82205 Geisenbrunn (DE); Gabanyi, Annette, 82205 Geisenbrunn (DE)
(72) Erfinder: Gabanyi, Peter, 82205 Geisenbrunn (DE); Gabanyi, Annette, 82205 Geisenbrunn (DE)
(74) Vertreter: Feldkamp, Rainer
(86) Internationale Anmeldenummer: PCT/EP2006/000960
(87) Internationale Veröffentlichungsnummer: WO 2006/082076

(56) Entgegenhaltungen:
- DE-A1- 2 724 338
- DE-A1- 3 236 679
- DE-U1- 29 611 503

## Beschreibung

Die Erfindung bezieht sich auf ein Regelsystem für Flächenheizungen der im Oberbegriff des Anspruchs 1 genannten Art.

Die Flächenheizung, insbesondere in Form der Fußbodenheizung, jedoch auch in Form von beheizten Decken oder Wänden,hat in den letzten Jahren immer mehr an Bedeutung gewonnen. Auch in Mehrfamilienhäusern nutzt man die Vorteile eines wirtschaftlichen und energiesparenden Betriebs, günstiger raumlufthygienischer Verhältnisse, Behaglichkeit und eines zukunftorientierten, umweltfreundlichen Niedertemperatursystems.

Der Gesetzgeber stellt bestimmte Anforderungen an das Regelsystem einer Heizanlage. Geregelt werden:
1. Heizwassertemperatur und
2. Heizwasservolumenstrom

Die Heizwassertemperatur (Vorlauftemperatur) wird über eine zentrale Regelung einheitlich für das ganze Haus über die Außentemperatur und/oder eine andere Führungsgröße gesteuert.

Die Regelung des Heizwasservolumenstroms wird, wie ebenfalls vom Gesetzgeber vorgeschrieben, über selbsttätig wirkende Einrichtungen zur raumweisen Regelung der Raumtemperatur erreicht.

Das von der Führungsgröße "Raumlufttemperatur" beeinflusste Regelventil verändert den Heizwasservolumenstrom mit dem Ziel, die Wärmeabgabe der Fläche, beispielsweise des Fußbodens, an den Raum zu verändern.

Bei Flächenheizung ist die bei Raumheizkörpern bekannte Art der raumweisen Temperaturregelung mit der Raumtemperatur als Führungsgröße in Ermangelung einer Alternative nicht ohne weiteres geeignet, da die Flächenheizung hierfür zu träge ist. Durch die bei modernen Fußbodenheizungen üblichen Bodenaufbauten wird die Veränderung der Wärmeabgabe erst nach ca. 2 Stunden wirksam. Diese Zeit zwischen Aktion des Regelventils und Beginn der Wirksamkeit auf den Raum nennt man Regelzeit oder Verzugszeit. Gleiches gilt für Flächenheizungen in Form von beheizten Wänden oder Decken.

Diese nachteilige Wirkung dieser Verzugszeit wird durch das als "Selbstregeleffekt" bekannte physikalische Phänomen gemildert. Dieser natürliche Effekt reguliert die Leistungsabgabe der Heizfläche direkt proportional zur Temperaturdifferenz zwischen Heizflächentemperatur und Raumtemperatur. Dieser speziell bei der Flächenheizung wegen des geringen Temperaturunterschiedes sehr stark wirkende Effekt erfolgt unabhängig von regeltechnischen Anlagen und zeitgleich mit veränderten Raumtemperaturbedingungen. Das schlechte träge Verhalten des Regelventils wird vermindert.

Aus dem DE 296 11 503 U1 ist ein Temperaturregelsystem für Warmwasserheizplatten bekannt, bei dem ein Ventil zur Regelung des Geamt-Heizwasservolumenstroms vorgesehen ist, dem jeweilige, vor den einzelnen Warmwasserheizplatten angeordnete Einzeltemperaturregelsysteme nachgeschaltet sind, die jeweils aus einem Ventil und einem diesem parallel geschalteten Bypass bestehen, durch den nach Erreichen einer Solltemperatur und Schließen des Ventils einer verringerte Wassermenge strömt, um ein Abkühlen der Heizplatte zu verzögern.

Aus der DE 27 24 338 A1 ist ein Heizungssystem bekannt, bei dem jeweiligen Heizbereichen eine Bypasseinrichtung mit zwei parallelen Zweigen vorgeschaltet ist, wobei in einem Zweig eine verstellbare Einrichtung zur Reduzierung der Durchflussmenge angeordnet ist, während der andere Zweig ein Rohr mit einem gegenüber dem einen Zweig verringertem Strömungsquerschnitt oder ein Absperrorgan enthält. Eine kontrollierte Aufteilung des einem Heizbereich zugeführten Heizwasservolumenstroms ist nicht vorgesehen.

Aus der DE 32 36 679 A1 ist eine Vorrichtung zum Regeln der Temperatur eines Raumes, insbesondere des Innenraumes eines Kraftfahrzeuges, bekannt, bei dem vor einem Wärmetauscher zwei parallelgeschaltete Zuflussleitungen unterschiedlichen Querschnitts angeordnet sind, in denen getrennte Ventileinrichtungen vorgesehen sind. Die Aufteilung des Gesamt-Heizwasservolumens auf die Zuflussleitungen erfolgt in Abhängigkeit von der Einstellung der beiden Ventile.

Der Erfindung liegt die Aufgabe zugrunde, ein Regelsystem der eingangs genannten Art zu schaffen, das ein verbessertes Regelverhalten aufweist.

Diese Aufgabe wird durch die im Anspruch 1 angegebenen Merkmale gelöst.

Vorteilhafte Ausgestaltungen und Weiterbildungen der Erfindung ergeben sich aus den Unteransprüchen.

Der Erfindung liegt die Erkenntnis zu Grunde, dass bei einer Betrachtung der Wärmemenge, die dem Raum entsprechend der errechneten Heizlast zugeführt werden muss, um die geforderte Raumtemperatur zu erreichen, zwischen dem weitaus größeren Anteil permanent zuzuführender Wärme und einem geringen Anteil zu unterscheiden ist, der von äußeren Einflüssen wie z.B. Sonneneinstrahlung, Fremdwärme, Lüften usw. beeinflusst wird.

Gäbe es diese Störgrößen-Einflüsse nicht, so würde die für das ganze Haus der Außentemperatur angepasste Vorlauftemperatur ausreichend sein. Eine zusätzliche raumweise Regelung wäre nicht notwendig.

Der Anteil des Heizwasservolumenstroms, der der permanent zugeführten Wärmemenge entspricht, sollte nicht durch ein träges Regelventil beeinflusst werden.

Bei einem erfindungsgemäßen Regelsystem wird der Heizwasservolumenstrom mit einem Ventil in einem frei wählbaren Verhältnis in zwei Teil-Volumenströme geteilt, wobei jeder Teil-Volumenstrom durch zumindest eine andersartige Regelgröße beeinflusst werden kann. Der erste Teil des Heizwasservolumenstroms wird direkt oder über eine Drosseleinrichtung der Flächenheizung zugeführt, während der zweite Teil des Heizwasservolumenstroms über ein thermostatisch gesteuertes Regelventil der Flächenheizung zugeführt wird.

Bei einer Ausführungsform ist das oder über eine Drosseleinrichtung Ventil so ausgebildet, dass es eine Einstellung der proportionalen Anteile des der Flächenheizung direkt zugeführten ersten Teils des Heizwasservolumenstroms und des über das thermostatisch gesteuerte Regelventil zugeführten zweiten Teils des Heizwasservolumenstroms ermöglicht.

Hierbei kann das Ventil eine feste Einstellung der proportionalen Anteile des ersten und zweiten Teils des Heizwasservolumenstroms ergeben, oder die proportionalen Anteile des Heizwasservolumenstroms können einstellbar sein.

Im ersten Fall kann da Ventil eine feste Blende aufweisen, die den zweiten Teil des der Flächenheizung zugeführten Heizwasservolumenstroms bestimmt.

Im zweiten Fall kann das Ventil selbst eine Einstellmöglichkeit für die Größe der zwei Teil-Volumenströme haben, oder es kann zwischen dem Ventil und dem Einlass der Flächenheizung ein weiteres Einstellventil für den ersten Teil des der Flächenheizung direkt zugeführten Heizwasservolumenstroms fernsteuerbar sein.

Das den Gesamt-Heizwasservolumenstrom steuernde Ventil kann ein Einstell- bzw. Absperrventil zur hydraulischen Einregulierung der gesamten Flächenheizung in einer Heizungsanlage sein, das dem die Aufteilung in die zwei Teil-Volumenströme steuernden Ventil vor- oder nachgeschaltet ist.

Gemäß einer bevorzugten Ausgestaltung der Erfindung können das die Aufteilung in die zwei Teil-Volumenströme steuernde Ventil und das thermostatisch gesteuerte Regelventil und gegebenenfalls das Einstellventil und das den Gesamt-Heizwasservolumenstrom steuernde Ventil in einem gemeinsamen Ventilblock angeordnet sein, der einen Ausgang aufweist, an dem die ersten und zweiten Teile des Heizwasservolumenstroms miteinander vereinigt werden und der mit der Flächenheizung verbunden ist.

Die Erfindung wird nachfolgend anhand der Zeichnungen noch näher erläutert.

In der Zeichnung zeigen:
Figur 1 eine erste Ausführungsform des Regelsystems mit fester Einstellung der Teil-Volumenströme,
Figur 2 eine Ausführungsform des Regelsystems mit veränderlichen Einstellung der Teil-Volumenströme,
Figur 3 eine weitere Ausführungsform des Regelsystems mit veränderlicher Einstellung der Teil-Volumenströme,

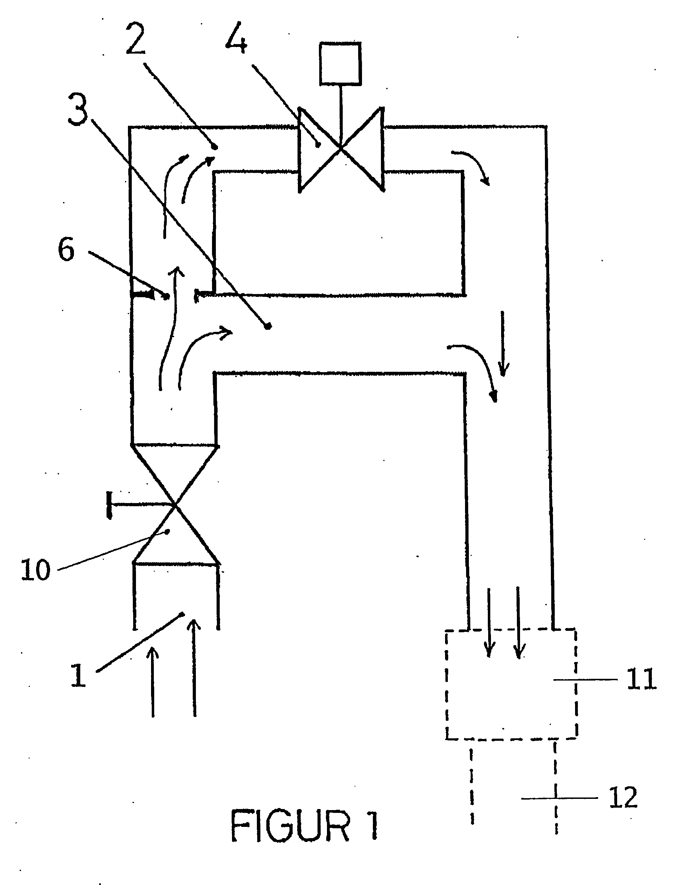

In Figur 1 ist eine erste Ausführungsform des Regelsystems gezeigt.

Bei dieser Ausführungsform des Regelsystems ist der Auslass eines Einstell-bzw. Absperrventils 10 mit einem Ventil 6 verbunden, das den Gesamt-Heizwasservolumenstrom 1 vom Vorlauf in zwei Teil-Heizwasservolumenströme 2, 3 aufteilt, von denen ein Volumenstrom 3 direkt der Flächenheizung 11 zugeführt wird, die mit dem Rücklauf 12 des Heizungssystems verbunden ist. Das Ventil 6 ist in diesem Fall durch eine Blende gebildet, die eine feste Aufteilung des Heizwasservolumenstroms 1 in die zwei Teilströme 2, 3 bewirkt. Der Teil-Volumenstrom 2 wird über ein thermostatisch gesteuertes Regelventil 4 ebenfalls dem Einlass der Flächenheizung 11 zugeführt, die beispielsweise eine Fußbodenheizung ist. Damit ist bei dieser Ausführungsform die proportionale Aufteilung des Heizwasservolumenstroms 1 in die zwei Teilströme 2, 3 konstruktiv fest vorgegeben.

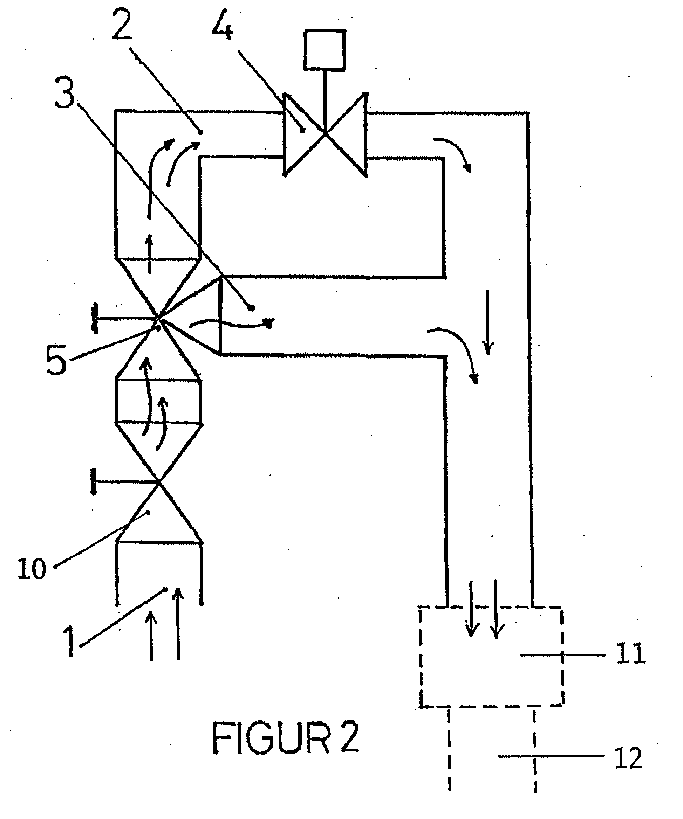

Demgegenüber ist bei der Ausführungsform nach Figur 2 das Ventil durch ein Ventil 5 gebildet, dass entweder von außen zu betätigen oder fernsteuerbar ist. Die Funktion dieses Ventils 5 ist die gleiche wie bei der Ausführungsform nach Figur 1, doch ist hier eine Einstellbarkeit der Aufteilung der Teil-Volumenströme 2, 3 gegeben. Hierbei kann der über das thermostatisch gesteuerte Regelventil 4 fließende Anteil entweder zu 0 oder zu 100 % gemacht werden.

Der Anteil des zweiten Volumenstroms 2 soll umso größer sein, je mehr Störgrößen, wie Fremdwärme, Sonneneinstrahlung, Himmelsrichtung usw. das Raumklima des einzelnen Raumes beeinflussen können.

Veränderungen sind später durch ein geändertes Nutzerverhalten möglich, die eine Veränderung des Einstellungsverhältnisses nach sich zieht.

Die Führungs- oder Regelgröße, die den Antrieb des Ventils 5 bzw. 7 steuert, ist eine andere wie die des Antriebs für das Ventil 4. Der Antrieb des thermostatisch gesteuerten Ventil 4 kann ein thermostatischer Fernfühler, ein elektrischer Stellmotor oder eine Schaltuhr sein.

Den hydraulischen Abgleich, das heißt die Einstellung des Gesamt-Heizwasservolumenstroms 1 zur Deckung der Heizlast des Raumes wird durch eine Betätigung des Ventils 10 erreicht. Gleichzeitig kann hiermit das Gesamt-Heizwasservolumen abgesperrt werden. Obwohl in den Zeichnungen dieses Ventil 10 in einer den Ventilen 5, 6 vorgeschalteten Anordnung gezeigt ist, kann es diesen Ventilen auch nachgeschaltet sein.

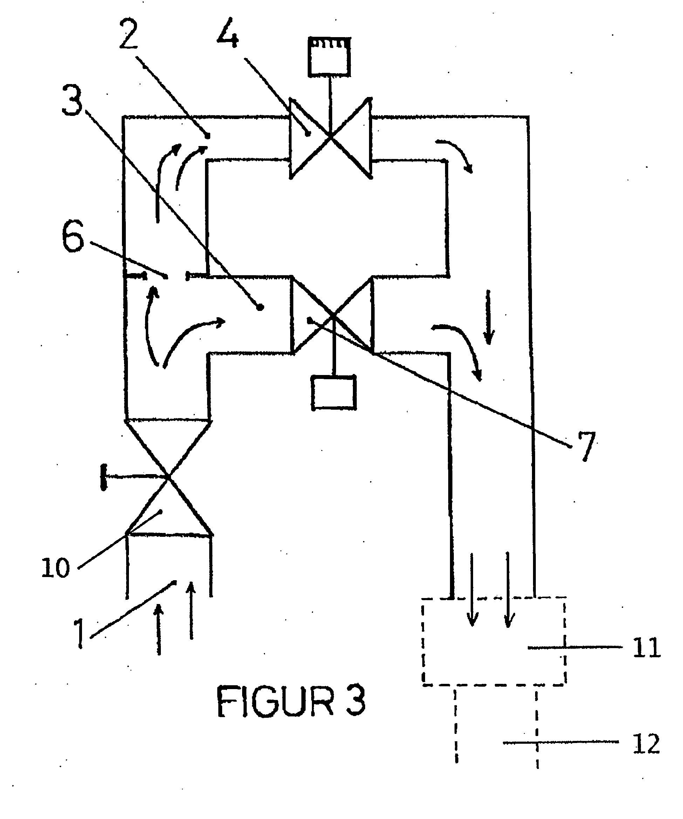

Bei der Ausführungsform nach Figur 3 wird das gleiche Ventil 6 wie in Figur 1 mit einer festen Blende verwendet (wobei jedoch auch das Ventil 5 wie in Figur 2 verwendet werden kann), doch ist auf dem Weg des ersten Teil-Volumenstroms 3 ein einstellbares Ventil 7 angeordnet, das eine Einstellung dieses ersten Teil-Volumenstroms ermöglicht.

Die Führungs- oder Regelgrößen, die den Antrieb des Ventils steuern, sind die Oberflächentemperatur des Bodens oder die Estrichtemperatur (Ladezustand) oder die Temperatur des Heizmediums.

Gemäß einer bevorzugten Ausgestaltung der Erfindung sind sämtliche in den Figuren 1 bis 3 gezeigten Ventilelemente 10, 5, 6, 4 und gegebenenfalls 7 zu einem einzigen Ventil-Block vereinigt, der einerseits mit dem Vorlauf und andererseits mit der Flächenheizung verbunden ist, so dass sonst bei Flächenheizungen in Wohnungen verwendete umfangreiche Verteiler entfallen können und durch ein einfaches Ring- oder Stichleitungssystem ersetzt werden können.

Durch die Anordnung in einem gemeinsamen Ventilblock können die Ventilkegel unterschiedlicher Ventile, wie das Ventil 4 und 7, durch eine gemeinsame Spindel betätigt werden, zum Beispiel die Spindel eines elektrischen Regelantriebs mit kombinierten Meß- und Steuerbefehlen oder für Frostschutz- bzw. Notbetrieb-Einstellungen.

## Patentansprüche

1. Regelsystem für Flächenheizungen, mit einem ersten Ventil (10) zur Regelung des Heizwasservolumenstroms durch die Flächenheizung (11) eines Raumes, wobei dem ersten Ventil (10) ein den dem jeweiligen Raum zugeführten Heizwasservolumenstrom (1) in zwei feste Teile (2, 3) aufteilendes zweites Ventil (5; 6) vor- oder nachgeschaltet ist, wobei der erste Teil (3) des Heizwasservolumenstroms (1) direkt oder über eine Drosseleinrichtung (7) der Flächenheizung (11) zugeführt wird, während der zweite Teil (2) des Heizwasservolumenstroms über ein thermostatisch gesteuertes Regelventil (4) der Flächenheizung (11) zugeführt wird, wobei das zweite Ventil (5; 6) zur festen Einstellung der proportionalen Anteile des der Flächenheizung (11) direkt oder über eine Diosseleinriching zugeführten ersten Teils (3) des Heizwasservolumenstroms und des über das thermostatisch gesteuerte Regelventil zugeführten zweiten Teils (2) des Heizwasservolumenstroms ausgebildet ist und wobei das erste Ventil (10), das zweite Ventil (5; 6) und das thermostatisch gesteuerte Regelventil (4) in einem gemeinsamen Ventilblock angeordnet sind, der einen Ausgang aufweist, an dem die ersten und zweiten Teile (3, 2) des Heizwasservolumenstroms miteinander vereinigt werden.

2. Regelsystem nach Anspruch 1, **dadurch gekennzeichnet, dass** das zweite Ventil (6) eine feste Einstellung der proportionalen Anteile des ersten und zweiten Teils (3, 2) des Heizwasservolumenstroms aufweist.

3. Regelsystem nach Anspruch 2, **dadurch gekennzeichnet, dass** das zweite Ventil (6) eine feste Blende ist, die den zweiten Teil (2) des der Flächenheizung (11) zugeführten Heizwasservolumenstroms bestimmt.

4. Regelsystem nach Anspruch 1, **dadurch gekennzeichnet, dass** die proportionalen Anteile des Heizwasservolumenstroms durch das zweite Ventil (5) einstellbar sind.

5. Regelsystem nach Anspruch 4, **dadurch gekennzeichnet, dass** das zweite Ventil (5) fernsteuerbar ist.

6. Regelsystem nach Anspruch 2 oder 4, **dadurch gekennzeichnet, dass** zwischen dem zweiten Ventil (5; 6) und dem Einlass der Flächenheizung (11) ein drittes Einstellventil (7) für den ersten Teil (3) des Heizwasservolumenstroms angeordnet ist, das ebenfalls in dem gemeinsamen Ventilblock angeordnet ist.

7. Regelsystem nach Anspruch 1, **dadurch gekennzeichnet, dass** das erste Ventil (10) ein Einstell- bzw. Absperrventil (10) zur hydraulischen Einregulierung der gesamten Flächenheizung in einer Heizungsanlage ist, das dem zweiten Ventil (5; 6) vor- oder nachgeschaltet ist.

## Claims

1. A regulating system for panel heating arrangements comprising a first valve (10) for regulating the heating water volume flow through the panel heating arrangement (11) of a room, wherein connected upstream or downstream of the first valve (10) is a second valve (5; 6) dividing the heating water volume flow (1) fed to the respective room into two fixed parts (2, 3), wherein the first part (3) of the heating water volume flow (1) is fed directly or by way of a throttle device (7) to the panel heating arrangement (11) while the second part (2) of the heating water volume flow is fed by way of a thermostatically controlled regulating valve (4) to the panel heating arrangement (11), wherein the second valve (5; 6) is adapted to fixedly set the proportional components of the first part (3) of the heating water volume flow, which is fed to the panel heating arrangement (11) directly or by way of a throttle device and the second part (2) of the heating water volume flow, that is fed by way of the thermostatically controlled regulating valve, and wherein the first valve (10), the second valve (5; 6) and the thermostatically controlled regulating valve (4) are arranged in a common valve block having an output at which the first and second parts (3, 2) of the heating water volume flow are combined together.

2. A regulating system according to claim 1 **characterised in that** the second valve (6) has a fixed setting in respect of the proportional components of the first and second parts (3, 2) of the heating water volume flow.

3. A regulating system according to claim 2 **characterised in that** the second valve (6) is a fixed aperture determining the second part (2) of the heating water volume flow fed to the panel heating arrangement (11).

4. A regulating system according to claim 1 **characterised in that** the proportional components of the heating water volume flow are adjustable by the second valve (5).

5. A regulating system according to claim 4 **characterised in that** the second valve (5) is remotely controllable.

6. A regulating system according to claim 2 or claim 4 **characterised in that** arranged between the first valve (5; 6) and the inlet of the panel heating arrangement (11) is a third adjusting valve (7) for the first part (3) of the heating water volume flow, which is also arranged in the common valve block.

7. A regulating system according to claim 1 **characterised in that** the first valve (10) is an adjusting or shut-off valve (10) for hydraulically regulating the total panel heating arrangement in a heating installation, which is connected upstream or downstream of the second valve (5; 6).

## Revendications

1. Système de régulation pour des planchers chauffants, avec une première vanne (10) pour réguler le débit volumique d'eau de chauffage passant à travers le plancher chauffant (11) d'un local, sachant que la première vanne (10) est précédée ou suivie d'une deuxième vanne (5 ; 6) divisant en deux parties fixes (2, 3) le débit volumique d'eau de chauffage (1) apporté au local respectif, sachant que la première partie (3) du débit volumique d'eau de chauffage (1) est apportée au plancher chauffant (11) directement ou par l'intermédiaire d'un organe d'étranglement (7), tandis que la deuxième partie (2) du débit volumique d'eau de chauffage est apportée au plancher chauffant (11) par l'intermédiaire d'une vanne de régulation (4) à commande thermostatique, sachant que la deuxième vanne (5 ; 6) est conçue pour le réglage fixe des parts proportionnelles de la première partie (3) du débit volumique d'eau de chauffage (1) apportée au plancher chauffant (11) directement ou par l'intermédiaire d'un organe d'étranglement et de la deuxième partie (2) du débit volumique d'eau de chauffage apportée par l'intermédiaire de la vanne de régulation à commande thermostatique, et sachant que la première vanne (10), la deuxième vanne (5 ; 6) et la vanne de régulation (4) à commande thermostatique sont disposées dans un bloc de vannes commun qui présente une sortie où sont réunies la première partie (3) et la deuxième partie (2) du débit volumique d'eau de chauffage.

2. Système de régulation selon la revendication 1, **caractérisé en ce que** la deuxième vanne (6) présente un réglage fixe des parts proportionnelles de la première partie (3) et la deuxième partie (2) du débit volumique d'eau de chauffage.

3. Système de régulation selon la revendication 2, **caractérisé en ce que** la deuxième vanne (6) est un orifice d'étranglement fixe qui détermine la deuxième partie (2) du débit volumique d'eau de chauffage apporté au plancher chauffant (11).

4. Système de régulation selon la revendication 1, **caractérisé en ce que** les parts proportionnelles du débit volumique d'eau de chauffage peuvent être réglées par la deuxième vanne (5).

5. Système de régulation selon la revendication 4, **caractérisé en ce que** la deuxième vanne (5) peut être commandée à distance.

6. Système de régulation selon la revendication 2 ou 4, **caractérisé en ce qu'**une troisième vanne de réglage (7) pour la première partie (3) du débit volumique d'eau de chauffage est disposée entre la deuxième vanne (5 ; 6) et l'entrée du plancher chauffant (11), et elle est disposée elle aussi dans le bloc de vannes commun.

7. Système de régulation selon la revendication 1, **caractérisé en ce que** la première vanne (10) est une vanne (10) de réglage ou d'arrêt pour la régulation hydraulique de l'ensemble du plancher chauffant dans une installation de chauffage, et elle est montée avant ou après la deuxième vanne (5 ; 6).
